(19) Europäisches Patentamt
European Patent Office
Office européen des brevets

(11) Veröffentlichungsnummer: **0 443 167 A1**

(12) **EUROPÄISCHE PATENTANMELDUNG**

(21) Anmeldenummer: **90124701.5**

(22) Anmeldetag: **19.12.90**

(51) Int. Cl.[5]: **C08G 18/79**, C07D 251/34, B01J 31/18, B01J 37/04

(30) Priorität: **23.02.90 DE 4005762**

(43) Veröffentlichungstag der Anmeldung: **28.08.91 Patentblatt 91/35**

(84) Benannte Vertragsstaaten: **AT BE CH DE ES FR GB IT LI NL**

(71) Anmelder: **BAYER AG**
**W-5090 Leverkusen 1 Bayerwerk(DE)**

(72) Erfinder: **Scholl, Hans-Joachim, Dr.**
**Am Feldrain 5**
**W-5000 Köln 80(DE)**

(54) **Trimerisierungskatalysatoren, ein Verfahren zu ihrer Herstellung und ihre Verwendung bei der Herstellung von Isocyanuratgruppen aufweisenden Polyisocyanaten.**

(57) Für die Heterogenkatalyse geeignete Trimerisierungskatalysatoren für organische Isocyanate, bestehend aus quartären Ammonium- oder Phosphoniumfluoriden, die an ausgewählten Trägermaterialien adsorbiert vorliegen, ein Verfahren zur Herstellung dieser Katalysatoren durch Herstellung einer alkoholischen Lösung eines quartären Ammonium- oder Phosphoniumsalzes und Aufziehen der so erhaltenen Katalysatorlösung auf das Trägermaterial und die Verwendung der Katalysatoren bei der Herstellung von Isocyanuratgruppen aufweisenden Polyisocyanaten.

EP 0 443 167 A1

Die Erfindung betrifft neue, für die Heterogenkatalyse, insbesondere als Festbettkatalysatoren geeignete Trimerisierungskatalysatoren für organische Isocyanate, ein Verfahren zu ihrer Herstellung und ihre Verwendung bei der Herstellung von Isocyanuratgruppen aufweisenden Polyisocyanaten.

Katalysatoren zur Trimerisierung organischer Isocyanate sind in großer Zahl bekannt (J.H. Saunders und K.C. Frisch, Polyurethanes Chemistry and Technology, S. 94 ff (1962)). Als Katalysatoren für die Trimerisierung sind starke organische Basen geeignet, so z.B. die alkalisch wirkenden Metallsalze von Carbonsäuren, Metallalkoholate, Metallphenolate, Alkalimetallcarbonate, tert. Amine, tert. Phosphine und die "Onium"-Verbindungen von Stickstoff und Phosphor sowie basische Heterocyclen dieser Elemente.

Es handelt sich hierbei im allgemeinen um in homogener Phase einzusetzende Katalysatoren, die den als Ausgangsmaterialien eingesetzten Diisocyanaten in oftmals beträchtlichen Mengen zugesetzt werden und anschließend aus den Verfahrensprodukten entfernt werden müssen.

Es sind zwar auch Verfahren bekannt geworden (z.B. DE-OS 3 814 167 bzw. DE-OS 38 27 596), bei denen quartäre Ammonium- oder Phosphoniumfluoride als Trimerisierungskatalysatoren eingesetzt werden, die nach ihrer "Neutralisation" mit einem Katalysatorgift zwecks Abbruch der Trimerisierungsreaktion im Verfahrensprodukt verbleiben, ohne daß in den resultierenden Isocyanurat-Polyisocyanaten Trübungen entstehen, jedoch weisen auch die so hergestellten Polyisocyanate mit Isocyanuratstruktur den Nachteil auf, daß die "neutralisierten" Trimerisierungskatalysatoren in den Verfahrensprodukten als Fremdkörper vorliegen und die Lagerfähigkeit über einen längeren Zeitraum durch Bildung von Trübungen in den zunächst klaren Produkten beeinträchtigen.

Es war daher die der Erfindung zugrundeliegende Aufgabe, neue Trimerisierungskatalysatoren für organische Isocyanate zur Verfügung zu stellen, die für die Heterogenkatalyse, insbesondere als Festbettkatalysatoren geeignet sind, so daß die unter Verwendung dieser Katalysatoren hergestellten Polyisocyanate mit Isocyanuratstruktur völlig frei von Trimerisierungskatalysatoren oder deren Folgeprodukten anfallen und nicht mehr mit den genannten Nachteilen behaftet sind.

Diese Aufgabe konnte durch die Bereitstellung der nachstehend näher beschriebenen erfindungsgemäßen Trimerisierungskatalysatoren gelöst werden. Die neuen Katalysatoren bestehen im wesentlichen aus quartären Ammonium- oder Phosphoniumfluoriden der in den letztgenannten Veröffentlichungen bereits genannten Art in auf ganz bestimmte, ausgewählte Trägermaterialien aufgezogener, d.h. an diesen Trägermaterialien adsorbierter Form.

In den zuletztgenannten Veröffentlichungen ist zwar bereits davon die Rede, daß die dort beschriebenen quartären Ammonium- oder Phosphoniumfluoride auf Trägermaterialien aufgezogen werden können, jedoch sind die in den Beispielen konkret beschriebenen Trägermaterialien von den erfindungsgemäß einzusetzenden Trägermaterialien grundverschieden und zur Lösung der genannten Aufgabe, insbesondere zur Festbettkatalyse, ungeeignet.

Gegenstand der Erfindung sind für die Heterogenkatalyse geeignete Trimerisierungskatalysatoren für organische Isocyanate, bestehend aus an porösen Trägermaterialien adsorbiert vorliegenden quartären Ammonium- oder Phosphoniumfluoriden, dadurch gekennzeichnet, daß das Trägermaterial aus einem kugelförmigen Adsorbens der Korngröße (90 %) 0,1 bis 10 mm, eines Porenvolumens von 0,4 bis 1,4 ml/g, eines mittleren Porendurchmessers von 7 bis 50 nm und einer spezifischen Oberfläche (BET) von 100 bis 700 $m^2/g$ besteht.

Gegenstand der Erfindung ist auch ein Verfahren zur Herstellung dieser Katalysatoren durch Verrühren eines Alkalifluorids und eines quartären Ammonium- oder Phosphoniumsalzes, in Gegenwart eines alkoholischen Lösungsmittels, Abfiltrieren von gebildeten Niederschlägen und Aufziehen der so erhaltenen, homogenen, gegebenenfalls mit weiterem alkalischen Lösungsmittel verdünnter Katalysatorlösung auf ein Trägermaterial, dadurch gekennzeichnet, daß das Trägermaterial aus einem Adsorbens der Korngröße (90 %) 0,1 bis 10 mm, eines Porenvolumens von 0,4 bis 1,4 ml/g, eines mittleren Porendurchmessers von 7 bis 50 nm und einer spezifischen Oberfläche (BET) von 100 bis 700 $m^2/g$ besteht.

Gegenstand der Erfindung ist schließlich auch die Verwendung der Katalysatoren bei der Herstellung von Isocyanuratgruppen aufweisenden Polyisocyanaten durch Trimerisierung eines Teils der Isocyanatgruppen von organischen Diisocyanaten.

Bei den erfindungswesentlichen Trägermaterialien handelt es sich um anorganische oder organische, poröse kugelförmige Adsorbentien der bereits obengenannten Kenndaten. Vorzugsweise weisen die als Trägermaterialien zum Einsatz gelangenden Adsorbentien eine Teilchengröße (90 %) von 0,2 bis 5 mm, ein Porenvolumen von 0,6 bis 1,2 ml/g, einen mittleren Porendurchmesser von 9 bis 30 nm und eine spezifische Oberfläche von 110 bis 600 $m^2/g$ auf. Aufgrund ihrer Kugelform unterscheiden sich die erfindungsgemäß zum Einsatz gelangenden Adsorbentien grundsätzlich von amorphem Kieselgel, beispielsweise dem für die Säulenchromatographie empfohlenen "Kieselgel 60" der Firma E. Merck, Darmstadt.

Gut geeignet sind beispielsweise handelsübliche, diesen Angaben entsprechende, im wesentlichen aus Siliciumdioxid bestehende, kugelförmige Trägermaterialien, wie sie von der Firma Grace GmbH, D 6520 Worms unter der Bezeichnung "GRACE Bead Type Silica Catalyst Supports C 10, C 15 bzw. C 30" vertrieben werden oder diesen Angaben entsprechende kugelförmige Adsorbermaterialien auf Basis von polymerem Divinylbenzol, wie sie von der Bayer AG, Leverkusen unter der Bezeichnung ®LEWATIT VP OC 1062 vertrieben werden.

Zur Herstellung der erfindungsgemäßen Trägerkatalysatoren geeignete Ammonium- oder Phosphoniumfluoride sind beispielsweise Verbindungen der Formeln

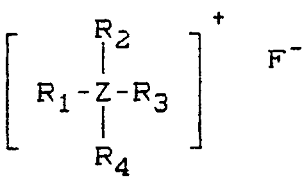

für welche

Z

für Stickstoff oder Phosphor steht,

$R_1$, $R_2$, $R_3$ und $R_4$

für gleiche oder verschiedene Reste stehen und Alkylgruppen mit 1 bis 18, vorzugsweise 1 bis 10 Kohlenstoffatomen bedeuten, wobei einer der Reste auch für einen araliphatischen Rest mit 7 bis 15 Kohlenstoffatomen stehen kann, und wobei die Summe der Anzahl der Kohlenstoffatome der vier Reste vorzugsweise bei 10 bis 40 liegt, oder wobei, im Fall von Z = Stickstoff, die Reste $R_1$ und $R_2$ und gegebenenfalls gleichzeitig die Reste $R_3$ und $R_4$ jeweils zusammen mit dem Stickstoffatom einen gegebenenfalls weitere Heteroatome enthaltenden Ring mit vorzugsweise 6 Ringatomen bilden können.

Zu den bevorzugten Fluoriden gehören insbesondere auch Ammoniumverbindungen der genannten allgemeinen Formel, für welche

Z

für Stickstoff,

$R_1$, $R_2$ und $R_3$

für gleiche oder verschiedene Alkylreste mit 1 bis 18, insbesondere 1 bis 4 Kohlenstoffatomen, besonders bevorzugt für Methylgruppen stehen und

$R_4$

für einen Benzylrest steht.

Zu den geeigneten bzw. bevorzugt geeigneten Fluoriden gehören beispielsweise Tetramethylammoniumfluorid, Tetraethylammoniumfluorid, Tetra-n-propylammoniumfluorid, Tetra-n-butylammoniumfluorid, N-Methyl-N,N,N-trialkylammoniumfluorid mit $C_8$-$C_{10}$-Alkylresten, N,N,N-Trimethyl-N-cyclohexylammoniumfluorid, N,N,N-Trimethyl-N-benzylammoniumfluorid, N,N,N-Triethyl-N-benzylammoniumfluorid, N,N,N-Trimethyl-N-phenylammoniumfluorid, N,N,N-Trimethyl-N-stearylammoniumfluorid, N,N'-Dimethyl-triethylendiamin-difluorid oder N-Methyl-triethylendiamin-monofluorid. Beliebige Gemische der beispielhaft genannten Fluoride können selbstverständlich ebenfalls verwendet werden.

Besonders bevorzugt sind N-Methyl-N,N,N-trialkylammoniumfluorid mit $C_8$-$C_{10}$-Alkylresten, N,N,N,N-Tetra-n-butylammoniumfluorid und N,N,N'-Trimethyl-N-benzylammoniumfluorid.

Zu den geeigneten Phosphoniumfluoriden, die im Vergleich zu den Ammoniumfluoriden im allgemeinen weniger bevorzugt sind, gehören die entsprechenden Phosphoniumverbindungen, d.h. Verbindungen der obengenannten allgemeinen Formel, für welche das zentrale Stickstoffatom durch ein Phosphoratom ersetzt ist und die Reste $R_1$ bis $R_4$ die genannte Bedeutung haben. Beispiele sind Tetramethylphosphoniumfluorid, Tetraethylphosphoniumfluorid oder Tetra-n-butylphosphoniumfluorid.

Die zum Einsatz gelangenden Fluoride können beispielsweise durch Umsetzung von

a) Alkalifluoriden, vorzugsweise Natrium- oder Kaliumfluorid, besonders bevorzugt Kaliumfluorid mit

b) quartären Ammonium- oder Phosphoniumsalzen von beliebigen Säuren mit Ausnahme der Fluorwasserstoffsäure, vorzugsweise starke Mineralsäuren, besonders bevorzugt Chlorwasserstoff- oder Bromwasserstoffsäure erhalten werden, wobei diese Umsetzung vorzugsweise in alkoholischem Reaktionsmilieu erfolgt.

Für die Umsetzung geeignete quartäre Ammonium- bzw. Phosphoniumsalze sind beispielsweise solche der Formel

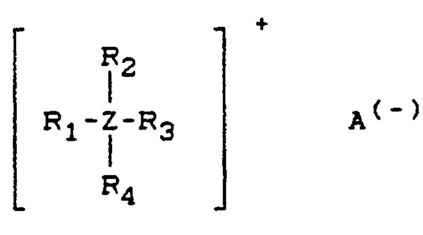

in welcher

Z, $R_1$, $R_2$, $R_3$ und $R_4$

die bereits obengenannte Bedeutung bzw. bevorzugte Bedeutung haben und

$A^{(-)}$

für das Anion einer starken Mineralsäure mit Ausnahme der Fluorwasserstoffsäure, insbesondere für ein Chlorid- oder Bromidion steht.

Typische Beispiele geeigneter Ausgangsmaterialien b) sind die den oben beispielhaft genannten quartären Fluoriden entsprechenden quartären Ammoniumchloride bzw. -bromide oder, jedoch weniger bevorzugt, die solchen Ammoniumsalzen entsprechenden Phosphoniumsalze.

Zur Herstellung der quartären Ammonium- bzw. Phosphoniumfluoride wird beispielsweise das Alkalifluorid a) in Alkoholen, die vorzugsweise einen unter 120 °C liegenden Siedepunkt Normaldruck) aufweisen, wie Methanol oder Ethanol gelöst oder suspendiert und nachfolgend unter Rühren eine vorzugsweise äquimolare Menge an Ammonium- oder Phosphoniumsalz b), gegebenenfalls in alkoholischer Lösung, zugesetzt, wobei die Mengen an a) und b) auch unterschüssig oder überschüssig, beispielsweise zu jeweils bis zu 50 Mol-%, sein können. Temperatur und Rührzeit sind unkritisch. Normalerweise wird in 10- bis 30-gewichtsprozentiger Lösung gearbeitet und bei Raumtemperatur 20 bis 60 Min. gerührt. Im Anschluß wird die so erhaltene Lösung durch Filtrieren von ausgeschiedenen Niederschlägen befreit.

Die Herstellung der erfindungsgemäßen Katalysatoren kann unter Verwendung von beliebig hergestellten Ammonium- oder Phosphoniumfluoriden der beispielhaft genannten Art erfolgen, wobei diese Fluoride im allgemeinen in Form von alkoholischen Lösungen (beispielsweise in Methanol oder Ethanol) auf die Trägermaterialien aufgezogen werden. Vorzugsweise wird hierbei jedoch nach dem Prinzip des erfindungsgemäßen Verfahrens gearbeitet, d.h. es werden die wie vorstehend beschrieben aus Alkalifluoriden und quartären Ammonium- oder Phosphoniumsalzen hergestellten alkoholischen Lösungen verwendet, die gegebenenfalls nach ihrer Herstellung durch Zugabe einer weiteren Menge an Alkohol weiter verdünnt werden. Im allgemeinen gelangen beim erfindungsgemäßen Verfahren 5- bis 20-gewichtsprozentige Lösungen der quartären Ammonium- bzw. Phosphoniumfluoride zu Einsatz.

Das "Aufziehen" der alkoholischen Lösungen der quartären Ammonium- oder Phosphoniumfluoride auf die Trägermaterialien erfolgt durch inniges Verrühren, vorzugsweise bei Raumtemperatur, und anschließendes Abtrennen des alkoholischen Lösungsmittels, beispielsweise im Vakuum. Bei dieser Art der Herstellung der erfindungsgemäßen Katalysatoren wird gleichzeitig erreicht, daß in den Adsorbentien gegebenenfalls adsorbiert vorgelegenes Wasser weitgehend entfernt wird, so daß eine unerwünschte Isocyanat/Wasser-Reaktion bei der erfindungsgemäßen Verwendung der Katalysatoren praktisch ausgeschlossen werden kann. Im allgemeinen werden die Mengen der alkoholischen Fluoridlösung bzw. des Trägermaterials so bemessen, daß letztendlich erfindungsgemäße Trägerkatalysatoren mit einem Fluoridgehalt von 0,05 bis 5 mMol $F^-$, vorzugsweise 0,1 bis 2 mMol $F^-$ pro g Trägermaterial resultieren.

Die auf diese Weise erhaltenen Trimerisierungskatalysatoren eignen sich ausgezeichnet zur Heterogenkatalyse, d.h. insbesondere als Festbettkatalysatoren, bei der katalytischen Herstellung von Isocyanuratgruppen aufweisenden Polyisocyanaten auf Basis von einfachen organischen Diisocyanaten insbesondere solchen mit aliphatisch oder cycloaliphatisch gebundenen Isocyanatgruppen.

Ausgangsdiisocyanate für diese katalytische Trimerisierungsreaktion sind insbesondere aliphatische oder cycloaliphatische Diisocyanate eines über 139, vorzugsweise von 140 bis 250 liegenden Molekulargewichts wie z.B. Tetramethylendiisocyanat, Hexamethylendiisocyanat (HDI), Dodecanmethylendiisocyanat, Cyclobutan-1,3-diisocyanat, Cyclohexan-1,3- und -1,4-diisocyanat, 1-Isocyanato-3,3,5-trimethyl-5-isocyanatomethylcyclohexan (IPDI), Perhydro-2,4- und/oder -2,6-diisocyanatotoluol oder Perhydro-2,4'- und/oder -4,4'-diisocyanatodiphenylmethan oder beliebige Gemische dieser Diisocyanate.

Besonders bevorzugt wird 1,6-Diisocyanatohexan (HDI) als Ausgangsdiisocyanat eingesetzt.

Die erfindungsgemäßen Katalysatoren können bei der Herstellung von Isocyanuratgruppen aufweisenden Polyisocyanaten auf unterschiedliche Weise verwendet werden. Einerseits können die erfindungsgemäßen Trimerisierungskatalysatoren dem der Trimerisierungsreaktion zu unterziehenden Ausgangsdiisocyanat hinzugefügt und nach Erreichen des gewünschten Trimerisierungsgrads durch Filtrieren aus dem Reaktionsgemisch entfernt werden. Andererseits eignen sich die erfindungsgemäßen Trimerisierungskatalysatoren hervorragend als Festbettkatalysatoren für ein Verfahren, bei welchem die der Teiltrimerisierung zuzuführenden Ausgangsdiisocyanate beispielsweise eine mit dem Katalysatoren befüllte und auf die Reaktionstemperatur erhitzte Reaktionskolonne durchlaufen.

Die Menge des eingesetzten Katalysators hängt bei der erfindungsgemäßen Verwendung nach einer dieser Varianten von der Reinheit des organischen Ausgangsdiisocyanats ab. Die jeweils notwendige Katalysatormenge läßt sich daher am einfachsten in einem Vorversuch bestimmen. Im Falle der Zugabe des Heterogenkatalysators zum zu trimerisierenden Ausgangsdiisocyanat entspricht die Menge des Katalysators im allgemeinen einer Menge von 0,05 bis 1 mMol $F^-$/Mol Ausgangsdiisocyanat. Es können aber auch höhere Mengen eingesetzt werden, da die Reaktion jederzeit durch Abfiltration des Katalysators gestoppt werden kann.

Oftmals ist es zweckmäßig, die katalytische Wirkung der erfindungsgemäßen Katalysatoren durch eine geringe Menge an cokatalytisch wirkenden Urethangruppen zu unterstützen, Eine derartige Cokatalyse ist beispielsweise durch Zusatz einer geringen Menge eines Alkohols (beispielsweise 0,01 bis 1 Gew,-%, bezogen auf das Gewicht des eingesetzten Ausgangsdiisocyanats) erreichbar, da die zugesetzten Alkohole sofort mit dem im Überschuß vorliegenden Ausgangsdiisocyanat unter Urethanbildung abreagieren. Geeignete derartige potentielle Cokatalysatoren sind beispielsweise Methanol, Ethanol, Ethylenglykol oder 2-Ethylhexandiol-1,3. Die Alkohole können gleichzeitig mit dem Hauptkatalysator oder vorab zugesetzt werden.

Gemäß einer bevorzugten Variante der Herstellung von Isocyanuratgruppen aufweisenden Polyisocyanaten unter Verwendung der erfindungsgemäßen Katalysatoren werden in den Ausgangsdiisocyanaten vorliegende saure Verunreinigungen, die eine spontane Trimerisierung verhindern, und die die erfindungsgemäßen Katalysatoren mit der Zeit desaktivieren würden, vorab durch Zusatz einer geringen Menge einer basisch wirkenden Komponente "neutralisiert", um zu erreichen, daß die Trimerisierungsreaktion bei Zugabe des Katalysators zum Ausgangsdiisocyanat unter den üblichen Reaktionsbedingungen spontan eintritt und abläuft. Die Menge derartiger "Neutralisierungszusätze" läßt sich einfach durch einen Vorversuch bestimmen, Im übrigen ist es sinnvoll als "Neutralisationsmittel" Lösungen von quartären Ammonium- oder Phosphoniumfluoriden zu verwenden, wie sie in den erfindungsgemäßen Katalysatoren adsorbiert vorliegen, um so das Reaktionsgemisch nicht mit sonstigen Fremdsubstanzen zu belasten.

Die vorzugsweise unter Inertgasatmosphäre ablaufende Trimerisierungsreaktion wird vorzugsweise lösungsmittelfrei innerhalb des Temperaturbereichs von 0 bis 100 °C, insbesondere von 20 bis 80 °C durchgeführt, kann jedoch auch in Gegenwart von inerten Lösungsmitteln wie z.B. Kohlenwasserstoffen wie Toluol oder Xylol oder Estern, wie z.B. Butylacetat, erfolgen.

Die Trimerisierungsreaktion wird vorzugsweise innerhalb der genannten Temperaturbereiche bis zum Erreichen eines Trimerisierungsgrades von 5 bis 40, vorzugsweise 10 bis 30 % durchgeführt. Unter "Trimerisierungsgrad" ist hierbei der Prozentsatz der Isocyanatgruppen im Ausgangsdiisocyanat zu verstehen, die in Isocyanurat überführt werden, Der Trimerisierungsgrad kann während der Trimerisierungsreaktion beispielsweise durch fortlaufende Bestimmung des Brechungsindex, oder des NCO-Gehaltes des Reaktionsansatzes verfolgt werden.

Bei der Heterogenkatalyse wird, wie bereits dargelegt, die Beendigung der Trimerisierungsreaktion durch Abtrennen des Heterogenkatalysators bewirkt.

Die so erhaltenen Isocyanuratgruppen aufweisenden Polyisocyanate können, gewünschtenfalls, durch Zusatz geringer Anteile an sauer wirkenden Zusatzmitteln stabilisiert werden, damit die oben erörterte Herstellung der spontanen Trimerisationsbereitschaft durch Neutralisation von sauren Verunreinigungen rückgängig gemacht wird, Für diesen Zweck sind Zusätze von sauer wirkenden Substanzen in Mengen von 0,1 mMol bis weniger als 0,01 mMol pro Mol Isocyanatgruppen völlig ausreichend. Geeignete Stabilisatoren sind beliebige organische Säuren bzw, Säurechloride wie z.B. Sulfonsäuren wie beispielsweise Benzol- oder Toluolsulfonsäure oder ihre Chloride oder saure Ester der phosphorigen Säure oder der Phosphorsäure wie beispielsweise Dibutylphosphit, Dibutylphosphat oder Di-(2-ethylhexyl)-phosphat.

Die teiltrimerisierten Polyisocyanate können auf übliche Weise von flüchtigen Bestandteilen wie beispielsweise überschüssigem Ausgangsdiisocyanat und gegebenenfalls mitverwendetem Hilfslösungsmittel befreit werden. Auf diese Weise entstehen hochwertige, weitgehend monomerenfreie, Isocyanuratgruppen aufweisende Lackpolyisocyanate mit aliphatisch und/oder cycloaliphatisch gebundenen Isocyanatgruppen, die, gegebenenfalls in mit Blokkierungsmitteln für Isocyanatgruppen blockierter Form zur Herstellung von hochwertigen Polyurethanlacken, insbesondere Zweikomponenten-Polyurethanlacken eingesetzt werden können.

In den folgenden Beispielen beziehen sich alle Gewichtsangaben auf Gewichtsprozente.

## Beispiele

### Ausgangsmaterialien:

#### Quartäres Ammoniumsalz I:

Handelsübliches quartäres Ammoniumchlorid bestehend im wesentlichen aus N-Methyl-N,N,N-trialkylammoniumchlorid mit $C_8$-$C_{10}$-Alkylresten (®Aliquat 336 der Firma Fluka GmbH, D 7910 Neu-Ulm).

#### Adsorbens I:

Handelsüblicher, kugelförmiger Katalysatorträger auf Siliciumdioxid-Basis mit einer Teilchengröße (90 %) von ca. 2 bis 3 mm, einem Porenvolumen von 1,05 ml/g, einem Porendurchmesser von 15 nm und einer spezifischen Oberfläche von ca. 185 $m^2/g$ (GRACE Bead Type Silica Catalyst Support C 15, Hersteller: Firma GRACE GmbH, D 6520 Worms).

#### Adsorbens II:

Handelsüblicher, kugelförmiger Katalysatorträger auf Siliciumdioxid-Basis mit einer Teilchengröße (90 %) von ca. 2 bis 3 mm, einem Porenvolumen von 1,05 ml/g, einem Porendurchmesser von 30 nm und einer spezifischen Oberfläche von ca. 110 $m^2/g$ (GRACE Bead Type Silica Catalyst Support C 30).

Adsorbens III:

Handelsüblicher, kugelförmiger Katalysatorträger auf Siliciumdioxid-Basis mit einer Teilchengröße (90 %) von ca. 2 bis 3 mm, einem Porenvolumen von 1,05 ml/g, einem mittleren Teilchendurchmesser von 10 nm und einer spezifischen Oberfläche von ca. 280 $m^2/g$ (GRACE Bead Type Silica Catalyst Support C 10).

Adsorbens IV:

Handelsüblicher, kugelförmiger Katalysatorträger auf Basis eines Divinylbenzol-Polymerisats mit einer Teilchengröße (90 %) von 0,2 bis 0,8 mm, einem Porenvolumen von ca. 0,6 bis 0,65 ml/g, einem Teilchendurchmesser von 11 nm und einer spezifischen Oberfläche von ca. 500 bis 600 $m^2/g$ (®LEWATIT VP OC 1062 der Bayer AG, Leverkusen).

Beispiel 1 (Herstellung eines Heterogenkatalysators)

11,5 g Kaliumfluorid in 200 g Ethanol werden unter Rühren bei Raumtemperatur mit 80 g quartäres Ammoniumsalz I, welches in 100 g Ethanol gelöst vorliegt, versetzt. Nach 60 Minuten wird von unlöslichen Bestandteilen abfiltriert. Anschließend fügt man dem Filtrat 600 g ca. 98 %iges Ethanol hinzu (ca. 2 % Wasser) und verrührt die Lösung mit 600 g Adsorbens I. Nach 60-minütigem Rühren werden die Niedrigsieder im Vakuum bei 50 °C abgetrennt. Man erhält einen erfindungsgemäßen, rieselfähigen Heterogenkatalysator mit einem Fluoridgehalt von 0,21 mMol $F^-/g$.

Beispiel 2 (Herstellung eines Heterogenkatalysators)

Beispiel 1 wird wiederholt jedoch unter Verwendung von 600 g Adsorbens II anstelle des in Beispiel 1 verwendeten Adsorbens I. Man erhält ebenfalls einen rieselfähigen erfindungsgemäßen Heterogenkatalysator mit einem Gehalt an Fluoridionen von 0,21 mMol/g.

Beispiel 3 (Herstellung eines Heterogenkatalysators)

Beispiel 1 wird wiederholt jedoch unter Verwendung von 360 g Adsorbens III anstelle des in Beispiel 1 verwendeten 600 g Adsorbens I. Man erhält einen erfindungsgemäßen rieselfähigen Heterogenkatalysator mit einem Fluoridgehalt von 0,37 mMol/g.

Beispiel 4 (Herstellung eines Heterogenkatalysators)

5,8 g Kaliumfluorid in 100 g Ethanol werden unter Rühren bei Raumtemperatur mit 40 g quartäres Ammoniumsalz I, welches in 100 g Ethanol gelöst vorliegt, versetzt. Nach 60 Minuten wird von unlöslichen Bestandteilen abfiltriert. Anschließend werden 500 g Ethanol hinzugefügt.

600 g Adsorbens IV werden in 600 g Ethanol aufgeschlämmt. Man saugt scharf ab und verrührt den Rückstand mit der obengenannten ethanolischen Losung. Nach Abtrennen der Niedrigsieder im Vakuum bei 50 °C erhält man einen erfindungsgemäßen rieselfähigen Heterogenkatalysator mit einem Fluoridgehalt von 0,32 mMol/g.

Beispiel 5 (erfindungsgemäße Verwendung)

a) 2,3 g Kaliumfluorid in 50 g Ethanol werden unter Rühren bei Raumtemperatur mit 16 g quartäres Ammoniumsalz I, welches in 60 g Ethanol gelöst vorliegt, versetzt. Nach 60 Minuten filtriert man von unlöslichen Bestandteilen ab und fügt dem Filtrat 150 g 2-Ethylhexandiol-1,3 hinzu und trennt von Ethanol im Vakuum ab. Auf diese Weise entsteht eine Lösung eines quartären Ammoniumfluorids in Ethylhexandiol-1,3 mit einem Fluoridgehalt von 0,21 mMol/g, die zur "Neutralisation" von sauren Verunreinigungen im Ausgangsdiisocyanat eingesetzt werden kann.

b) Die Lösung gemäß 5a) wird durch Zusatz einer weiteren Menge an 2-Ethylhexandiol-1,3 auf einen Fluoridgehalt von 0,1 mMol/g verdünnt.

c) 3360 g (20 Mol) 1,6-Diisocyanatohexan (HDI) werden unter Rühren und Stickstoffatmosphäre mit 2 g der unter b) beschriebenen Lösung versetzt. Das Gemisch wird dann auf 50 °C erhitzt und mit 15 g des Katalysators gemäß Beispiel 1 versetzt. Das Reaktionsgemisch wird anschließend bei 62 bis 64 °C gerührt, wobei gleichzeitig der Reaktionsfortgang über die zunehmenden Brechungsindices verfolgt wird. Ca. 10 Minuten nach Zugabe des Heterogenkatalysators ist die Reaktion "angesprungen". Nach 7 Stunden bei 62 bis 64 °C ist ein Brechungsindex (23 °C) von 1,4660 erreicht (Ausgangswert: 1.4522), der einem NCO-Wert von 42 % entspricht. Man filtriert vom Katalysator ab und stabilisiert das Filtrat durch Zugabe von 0,2 g

Dibutylphosphat. Schließlich wird das Produkt durch Dünnschichtdestillation bei 120°C/0,1 mbar bis auf einen Restgehalt von 0,1 % von überschüssigem HDI befreit. Es resultiert ein klares, farbloses Isocyanuratgruppen aufweisendes Polyisocyanat mit einem NCO-Gehalt von 22,7 % und einer Viskosität (23°C) von 1700 mPa.s. Die Ausbeute, bezogen auf ursprünglich eingesetztes HDI beträgt 28,6 %.

Beispiel 6 (erfindungsgemäße Verwendung)

Beispiel 5c) wird wiederholt. Nach Erreichen eines Brechungsindex (23°C) von 1,4622, der einem NCO-Wert von 45 % entspricht (5 Stunden bei 63-65°C) wird gemäß Beispiel 5 aufgearbeitet.
Ausbeute: 21,3 %
NCO-Gehalt: 23,1 %
Viskosität (23°C): 1200 mPa.s

Beispiel 7 (erfindungsgemäße Verwendung)

Beispiel 5 wird wiederholt mit der Maßgabe, daß 2 g der Lösung gemäß Beispiel 5b) durch 2 g der Lösung gemäß Beispiel 5a) ersetzt werden. Nach Erreichen eines Brechungsindex von 1,4706 (23°C) nach 8-stündiger Reaktion bei 63 bis 64°C wird gemäß Beispiel 5c) aufgearbeitet.
Ausbeute: 37 %
NCO-Gehalt: 22,3 %
Viskosität (23°C): 3000 mPa.s

Beispiel 8 (erfindungsgemäße Verwendung)

3360 g (20 Mol) HDI werden unter Rühren und Stickstoffatmosphäre mit 2 g der Lösung gemäß Beispiel 5b) versetzt. Man erwärmt die Lösung auf 50°C, fügt 15 g Heterogenkatalysator gemäß Beispiel 2 hinzu und verfährt gemäß Beispiel 5c). Nach 9 Stunden ist ein Brechungsindex (23°C) von 1,4661 erreicht. Nach Aufarbeitung gemäß Beispiel 5 erhält man ein Isocyanuratgruppen aufweisendes Polyisocyanat mit folgenden Daten:
Ausbeute: 29,1 %
NCO-Gehalt 22,8 %
Viskosität (23°C): 1900 mPa.s.

Beispiel 9

3360 g (20 Mol) HDI werden unter Rühren und Stickstoffatmosphäre mit 2 g 2-Ethylhexandiol-1,3 versetzt und anschließend auf 60°C erwärmt. Nach Hinzufügen von 15 g des Heterogenkatalysators gemäß Beispiel 3 wird 7 Stunden auf 60 bis 62°C erhitzt, wonach der Brechungsindex des Reaktionsgemischs (23°C) bei 1,4638 liegt. Die Aufarbeitung gemäß Beispiel 5c) ergibt ein Isocyanuratgruppen aufweisendes Polyisocyanat mit folgenden Daten:
Ausbeute: 24,1 %
NCO-Gehalt: 22,1 %
Viskosität (23°C): 1600 mPa.s

Beispiel 10

1680 g (10 Mol) HDI werden unter Rühren und Stickstoffatmosphäre mit 1 g der Lösung gemäß Beispiel 5b) versetzt. Man erwärmt das Reaktionsgemisch auf 60°C, fügt 10 g des Heterogenkatalysators gemäß Beispiel 4 hinzu und rührt das Gemisch während 6,5 Stunden bei 61 bis 63°C. Nach Erreichen eines Brechungsindex (23°C) von 1,4602 wird vom Katalysator abfiltriert, das Filtrat mit 0,1 g Dibutylphosphat stabilisiert und nachfolgend entsprechend Beispiel 5c) aufgearbeitet. Man erhält ein Isocyanuratgruppen aufweisendes Polyisocyanat mit folgenden Daten:
Ausbeute: 17,3 %
NCO-Gehalt: 23,7 %
Viskosität (23°C): 1000 mPa.s

**Patentansprüche**

1. Für die Heterogenkatalyse geeignete Trimerisierungskatalysatoren für organische Isocyanate, bestehend aus an porösen Trägermaterialien adsorbiert vorliegenden quartären Ammonium- oder Phosphoniumfluoriden, dadurch gekennzeichnet, daß das Trägermaterial aus einem kugelförmigen Adsorbens der Korngröße (90 %) 0,1 bis 10 mm, eines Porenvolumens von 0,4 bis 1,4 ml/g, eines mittleren Porendurchmessers von 7 bis 50 nm und einer spezifischen Oberfläche (BET) von 100 bis 700 $m^2$/g besteht.

2. Verfahren zur Herstellung von Trimerisierungskatalysatoren gemäß Anspruch 1 durch Verrühren eines Alkalifluorids und eines quartären Ammonium- oder Phosphoniumsalzes, in Gegenwart eines alkoholischen Lösungsmittels, Abfiltrieren von gebildeten Niederschlägen und Aufziehen der so erhaltenen, homogenen, gegebenenfalls mit weiterem alkoholischen Lösungsmittel verdünnten Katalysatorlösung auf ein Trägermaterial, dadurch gekennzeichnet, daß das Trägermaterial aus einem kugelförmigen Adsorbens der Korngröße (90 %) 0,1 bis 10 mm, eines Porenvolumens von 0,4 bis 1,4 ml/g, eines mittleren Porendurchmessers von 7 bis 50 nm und einer spezifischen Oberfläche (BET) von 100 bis 700 $m^2$/g besteht.

3. Verfahren gemäß Anspruch 2, dadurch gekennzeichnet, daß man als quartäres Ammonium- oder Phosphoniumsalz ein solches der Formel

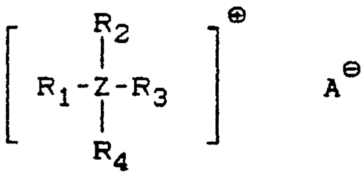

in welcher

Z

für Stickstoff oder Phosphor steht,

$R_1$, $R_2$, $R_3$ und $R_4$

für gleiche oder verschiedene Reste stehen und Alkylgruppen mit 1 bis 18 Kohlenstoffatomen bedeuten, wobei einer der Reste auch für einen araliphatischen Rest mit 7 bis 15 Kohlenstoffatomen stehen kann, und wobei die Summe der Anzahl der Kohlenstoffatome der vier Reste bei 10 bis 40 liegt oder wobei, im Fall von Z = Stickstoff, die Reste $R_1$ und $R_2$ und gegebenenfalls gleichzeitig die Reste $R_3$ und $R_4$ jeweils zusammen mit dem Stickstoffatom einen gegebenenfalls weitere Heteroatome enthaltenden Ring mit 6 Ringatomen bilden können, und

$A^{\ominus}$

für das Anion einer starken Mineralsäure mit Ausnahme der Fluorwasserstoffsäure, insbesondere für ein Chlorid- oder Bromidion steht,

verwendet.

**4.** Verwendung der Katalysatoren gemäß Anspruch 1 bei der Herstellung von Isocyanuratgruppen aufweisenden Polyisocyanaten durch Trimerisierung eines Teils der Isocyanatgruppen von organischen Diisocyanaten.

**5.** Verwendung gemäß Anspruch 4 zur Herstellung von Isocyanuratgruppen aufweisenden Polyisocyanaten auf Basis von Ausgangsdiisocyanaten mit aliphatischen und/oder cycloaliphatisch gebundenen Isocyanatgruppen.

Europäisches Patentamt

# EUROPÄISCHER RECHERCHENBERICHT

Nummer der Anmeldung

EP 90124701.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| D,Y | DE - A1 - 3 827 596 (BAYER) * Ansprüche 1-4 * -- | 1-5 | C 08 G 18/79<br>C 07 D 251/34<br>B 01 J 31/18<br>B 01 J 37/04 |
| Y | EP - A1 - 0 339 396 (BAYER) * Ansprüche 1-4 * -- | 4,5 | |
| Y | CHEMICAL ABSTRACTS, Band 84, Nr. 12, 22. März 1976, Columbus, Ohio, USA OTOUMA, HIROSHI et al. "The role of pores in catalyst carriers" Seite 429, Spalte 1, Zusammenfassung-Nr. 80 213u & Seramikkusu 1975, 10(10), 767-74 -- | 1-5 | |
| Y | CHEMICAL ABSTRACTS, Band 95, Nr. 1, 6. Juli 1981, Columbus, Ohio, USA KOBAYASHI, JUNICHI et al. "Catalytic dehydrochlorination by supported molten salt. The role of pore structure of carrier" Seite 581, Spalte 1, Zusammenfassung-Nr. 6 055e & Kenkyu Hokoku - Asahi Garasu Kogyo Gijutsu Shoreikai 1980,37, 251-65 -- | 1-5 | RECHERCHIERTE SACHGEBIETE (Int Cl 5)<br>C 08 G 18/00<br>C 07 D 251/00<br>B 01 J 31/00<br>B 01 J 37/00 |
| A | DE - A1 - 3 814 167 (BAYER) * Anspruch 1 * -- | 4,5 | |
| P,A | DE - A1 - 3 902 078 (BAYER) * Anspruch 4 * | 4,5 | |

Der vorliegende Recherchenbericht wurde für alle Patentansprüche erstellt

| Recherchenort | Abschlußdatum der Recherche | Prüfer |
|---|---|---|
| WIEN | 02-05-1991 | HAMMER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

Europäisches Patentamt

# EUROPÄISCHER RECHERCHENBERICHT

Nummer der Anmeldung

-2-

EP 90124701.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| | -- | | |
| A | CHEMICAL ABSTRACTS, Band 109, Nr. 4, 25. Juli 1988, Columbus, Ohio, USA PASCARU, ALEXANDRU et al. "Activated carbon cyclotrimerization catalysts" Seite 79, Spalte 1, Zusammenfassung-Nr. 24 519w & Rom. RO 93,134 | 1-5 | |
| | ---- | | |

RECHERCHIERTE SACHGEBIETE (Int Cl 5)

Der vorliegende Recherchenbericht wurde für alle Patentansprüche erstellt.

| Recherchenort | Abschlußdatum der Recherche | Prüfer |
|---|---|---|
| WIEN | 02-05-1991 | HAMMER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument